# EUROPEAN PATENT APPLICATION

(11) **EP 2 431 603 A1**
(43) Date of publication of application: **21.03.2012**
(21) Application number: 10380117.1
(22) Date of filing: 16.09.2010
(51) Int. Cl.: F03D 3/06, F03D 9/00, F03D 3/04

(54) **Hybrid eolic-solar gernerator**

(71) Applicant: Hydrogeneos S.L., 39003 Santander Cantabria (ES)
(72) Inventor: Balenchana Pérez, Carlos, 39003 Santander (Cantabria) (ES)
(74) Representative: Carvajal y Urquijo, Isabel

(57) **Abstract**

Hybrid eolic-solar generator formed by a photovoltaic solar module (1) on an eolic module which has a rotor (3) formed in turn by two horizontal inertia flywheels which rotate integrally around a central axis (27), mobile vanes (5) arranged between both of them, their rotation axis being perpendicular to said inertia flywheels (4), and at least one stop (6) for each vane (5). The stops (6) for the vanes (5) are housed in the interior of the inertia flywheels (4) from which the end (17,18) of each one of them projects, so that the vanes (5) make contact with said end (17,18) when, propelled by the wind throughout their rotation, they are directed towards the central axis of the flywheels (4). The stops (6) have withdrawal means for their ends (17, 18) allowing the free rotation of the vanes (5) in a particular direction.

## Description

### TECHNICAL FIELD OF THE INVENTION

The present invention relates to the technical field of energy generators, more specifically to hybrid eolic-solar generators in which the eolic rotor is a panemone type, with a vertical rotation axis, and the vanes rotate by wind action with respect to a rotation axis near one of its ends, being their rotation limited by means of adjustable stops.

### BACKGROUND OF THE INVENTION

The exploitation of eolic energy is well-known since the earliest times of mankind (the Egyptians already sailed by the fourth or fifth millennium before Christ).

The vertical-axis eolic mills appeared before the horizontal-axis ones, as evidenced by the Chinese panemones, earlier than 400 B.C., which are probably precursors of the Persian mills, also having a vertical axis. Its construction was simple but unrefined and the sails or blades were fixed with respect to the rotor.

The vertical-axis mills main advantages, over the horizontal-axis mills, are that they use the direct power of the wind and that most of them do not need a directional mechanism.

In the nineteenth century we can find the first patents on mills having vertical axis and blades or vanes mobile with respect to the rotor. In the US32,428 document the blades do not move freely but they are controlled by an eccentric mechanism that directs the rotation according to the wind direction. This model presents a difficulty with the start and needs a directional mechanism.

We also find patents with blades that move freely pushed by wind action, but only at a certain rotation angle limited by different types of stops, about 90° in patents US44,018, US105,915, DE3,918, US232,205 y US242,211; and about 180° in patents US110,683, US153,237, US223,308 and US1,074,011. This partial limitation of the complete rotation produces difficulties with the mill start from an idle condition, because there may be some blades directed so that they exert force in the opposite direction to the normal mill rotation. It also causes that there exists an instant, in the rotor area that is rotating against the wind direction, in which the blades exert a force opposite the normal rotation direction of the mill.

All these patents have an open structure, with a radiated-wheel shape, with radial arms where the rotating blades are arranged and, in some cases, these arms are reinforced by means of bars, sections, or tensors. This type of structure presents certain resistance to the passage of wind and does not channel it, which generates unwanted turbulence, noise, vibrations and hinders the start of the rotor.

In these mills the blades hit against the stops that limit their rotation or against the mill structure itself, which produces noise, fatigue and the breaking of the blades.

Patents US279,066, US384,232, US498,068 and US2,247,929 disclose blades that can rotate almost 360°, which facilitates the control of the blade rotation by the wind, without any hits against the opening stops and offers slight resistance to the wind when they are in the rotor area that is rotating against the wind direction. Besides, when the stops are deactivated they leave the blades waving in the wind without exerting any rotation force on the rotor, allowing the quick stop thereof. But in these mills the blades may hit one other with the resulting noise and possible breaking.

In patents US279,066, US498,068, US505,736, US1,524,712 and US2,247,929 the blade stops are controlled by a mechanism on which the centrifugal force acts, which facilitates its automatic operation.

But these stops are controlled by a pulley or lever system placed mainly in external areas of the structure which produce noise, turbulence, and resistance to wind and hinder their maintenance.

When starting the mill from an idle condition, there may be blades placed at the opposite position of the stop where it must usually exert its pressure, which hinders the start of the rotor.

Likewise, when the stops are rearmed after their deactivation, there may be blades that remain in such opposite position for exerting the force on the stop, which may hinder the normal rotation of the rotor.

Patent US1,654,165 discloses a feature in the stops that allows them, in case that the blades remain in the position opposite the one on which they have to exert force on the stop, to reach their normal operation position since the blade produces the displacement of the stop helped by the wind pressure.

This patent presents the disadvantages indicated in the previous patents and also the stop has to be manually activated, for both its deactivation and activation.

In patent US3,743,848 we can find some electrically controlled stops, but they present the same disadvantages as regards the rotor start and the rearming of the stops that have been indicated for the previous patents.

Patents US485,933, US537,494, GB217485, US1,654,165, US2,038,467 and DE1206819 use rings or disks as a support structure for the blades and stops and, although they work as inertia flywheels, their purpose is neither this nor holding the control mechanism of the stops.

We can find structures for improving the wind flow that impacts on the eolic mills in patents US505,736 and US537,494, but these designs produce noise, turbulence and resistance to wind. The designs of patents FR515331 and FR515879 disclose chamfered sections to concentrate the wind on the rotor.

The combination of eolic rotors with solar panels has been produced since the invention of the latter, being it easier to couple the solar modules to vertical-axis eolic rotors than to horizontal-axis ones, as shown in patents US4,119,863, GB2013789, DE3126749, US4,551,631 and DE3814200.

Lighting has been one of the first applications for photovoltaic panels, being ideal the combination with eolic generators for this purpose, as in patent US4,200,904. Therefore there was a need for a system that could achieve an efficient generation of energy avoiding the inconveniences present in prior art generators.

### DESCRIPTION OF THE INVENTION

The present invention solves the problems present in prior art by means of a hybrid eolic-solar generator with a vertical rotation axis rotor and mobile vanes, which incorporates in the same apparatus the harnessing of solar and eolic energy in a compact design, and which fully harnesses wind power, the eolic rotor starting its rotation at very slow wind speed, maintaining a rotation speed as constant as possible, without being too much affected by the sudden wind changes. Besides, said hybrid eolic-solar generator minimizes noise and turbulence produced by the apparatus and has the capacity of continuing its operation at high wind speed without losing effectiveness and without having to stop the rotor due to a risk of breaking or tumbling, but it may be easily stopped in case of an emergency or when its use is unnecessary.

The present invention relates to a new design of a hybrid eolic-solar generator of the type whose eolic rotor has a vertical rotation axis and the vanes are mobile by wind action, with respect to a rotation axis near one of its ends.

The new hybrid eolic-solar generator is formed by several independent modules or units, which are yet connected to each other and complementary in their operation.

On the one hand, it comprises a photovoltaic solar module arranged on the upper part of the generator, with solar cells for capturing light energy and transforming it into electricity. These solar cells may be directed in order to follow the movement of the sun.

On the other hand, it comprises an eolic module formed in turn by a rigid structure and an eolic rotor.

The rigid structure serves as a support and anchorage for the rest of the elements of the generator, that is, for the solar module on its upper part, for the eolic rotor on its central part, and according to some preferred embodiments for the electric and electronic control systems and the necessary rechargeable batteries, in the holes or above or below the structure, for the aerodynamic wind leading edges, at its ends, or for a light module on its lower part. Besides, the rigid structure serves as a support for a system for anchoring the whole generator to the ground or to a wall.

The eolic rotor comprises two horizontal inertia flywheels, joined together in order to rotate in unison and leaving a space between them so that the wind that propels it flows. The eolic rotor is fixed to the central part of the structure, in order to make its rotation movement.

The internal face of the inertia flywheels presents a compact surface, with small openings from which only the ends of the stops of the vanes project, which facilitates the wind flow, preventing unwanted turbulence and noise

Between the two inertia flywheels one or several concentric series of mobile vanes are placed, mainly rectangular, with its larger side vertically placed, and with a rotation axis near one of its vertical sides. This rotation axis is housed by its ends in both inertia flywheels, allowing the free rotation of the vane, which will be propelled only by the wind.

Housed in suitable holes of the inertia flywheels, there are one or two stops for each vane, one end of each stop projecting from the internal face of the flywheels. If there is only one stop for each vane, it will be placed on the upper inertia flywheel, but if there are two stops for each vane, one will be placed on the upper inertia flywheel and the other on the same position, but on the lower inertia flywheel and directed towards the opposite direction of the upper one.

The relative position of the stops with respect to the vanes is in a radial direction, towards the rotation axis of the inertia flywheel, but parallel to the radius that is formed by the rotation axis of the vane and the axis of the inertia flywheel; so that the opposite end of the vane where it has its axis makes contact in its rotation with the end of the stop that projects from the inertia flywheel.

The stops have the technical feature that the end that makes contact with the vane is articulated and foldable in some cases, and retractile in some others, which allows their respective vane 360°-rotation in one direction and prevents a complete 360°-rotation in the other direction. All the stops are arranged so that they allow the same rotation pattern for all the vanes of hybrid generator.

This feature facilitates the start of the eolic rotor from an idle position, without wind circulation, by quickly directing each vane into operation mode.

When the eolic rotor is idle and the wind does not circulate, each vane may be directed towards any direction around its 360° rotation circumference.

When the wind begins to circulate with enough force for moving the vanes, they will rotate towards the direction that the force resulting from the wind pushes them, with a tendency to remain parallel to the wind direction, to offer minimal resistance. If in this rotation they come across their corresponding stop or stops on the side on which they allow the 360° rotation, the vanes will pass them, folding or retracting their ends and will continue their rotation pushed by the wind. But if in the rotation they come across their corresponding stop or stops on the side on which they interrupt their rotation, as they are unable to be folded or retracted, they will not be able to pass them and will transfer the force exerted by the wind on the vanes to the inertia flywheels, through the stops and the axis of the vanes.

The arrangement of the stops with respect to the vanes allows, given a particular wind direction, the vanes of a semicircle of the flywheels to be in contact with their respective stops, facilitating the wind force transmission, while the vanes on the other semicircle are aligned in the wind direction, exerting slight resistance thereto.

This arrangement creates torque on the inertia flywheels and when the force resulting from all the vanes that make contact with their stops is enough for breaking the inertia of the flywheels, they will begin to rotate.

A large number of vanes facilitates the generation of enough torque for making the eolic rotor rotate at low wind speed.

The arrangement of vanes throughout the surface of the inertia flywheels is made in concentric series, on imaginary circumferences, beginning from the more external one near the external edge of the flywheels.

This arrangement of the vanes on each concentric circumference is such that it is divided into equal angles.

The separation between the contiguous vanes of the same circumference and adjacent circumferences will be larger than double the distance of the smaller side of the vane, to prevent any contact between them during their rotation.

Likewise, the most internal series of vanes must be separated from the external part of the rotor axis at a distance larger than the smaller side of the vane, to prevent any contact during their rotation.

The resulting arrangement of the vanes is such that the only contact that each vane makes in its rotation is against its corresponding stop or stops.

Another technical feature, as described in the embodiments, is that some stop models comprise an axis for folding the whole stop and a weight adjustable by distance to this axis, which allows the stops to tilt as the centrifugal force acts, first those having the weight at the farthest end from the folding axis and then those having it nearer. When the inclination angle reaches a particular value, the ends of the stops that make contact with the vanes will be out of reach, having no contact between them, which will allow the free rotation of the vanes in both directions, stopping the transmission of wind force to the inertia flywheel.

Other models of stops comprise an electromagnet, which allows the stop to retract by means of the corresponding electronic regulation allowing the 360° rotation of the vane in both directions.

With all the previously described stop models it may be regulated the withdrawal or release of the vanes for a particular rotation speed of the rotor, for a gradual as well as a simultaneous release of a group of vanes.

In this way it may be possible to keep the rotor rotating regardless of an increase in wind speed.

Another technical feature of the stops that have a folding axis for the whole stop and a weight adjustable by distance to this axis, is that they may be blocked, manually or automatically, keeping the necessary inclination so as not to make contact at their foldable or retractile ends with the vanes, which allows their 360°-rotation in both directions.

In this way, the eolic rotor will not rotate by wind action, maintaining it like this when it is unnecessary to produce electric energy or when maintenance or repair tasks are carried out.

The stops with an electromagnet present the technical feature that they may be blocked with the folding or retractile end in retracted position, all of them at once and at any stop or operation mode of the rotor. This operation may be carried out by electric control in the generator itself or by remote control. In this way, an emergency stop may be performed in combination with an adequate brake for the rotor.

A permanent magnet generator may be coupled to each inertia flywheel, on their external face, fixing the permanent magnet rotor to the inertia flywheel and the stator or coil will be fixed to the rigid structure of the eolic module.

The hybrid eolic-solar generator also comprises an electric and electronic control system fixed to the structure, which allows the regulation of the electric production of the solar and eolic modules, the regulation of its operation and the output of electricity to the supply network, for charging the batteries or for supplying energy to the light module.

The hybrid eolic-solar generator comprises some aerodynamic wind leading edges fixed to the rigid structure, that allow directing the wind increasing the flow that passes through the eolic rotor and minimizing the resistance of the whole generator to the wind.

A light module may be also coupled to the generator on its lower part, transforming it into a lamp post.

Likewise, it may use rechargeable batteries for accumulating the electric energy produced and supplying energy to the light module, the electric circuits and any other electric apparatus.

It also comprises an anchorage system which, joined to the rigid structure, may fix the entire generator to the ground, a wall, or any other surface.

### DESCRIPTION OF THE FIGURES

There follows a description of an embodiment of the invention that refers to a series of drawings that help to better understand the invention and that is presented as an illustrative and non-limiting example thereof.

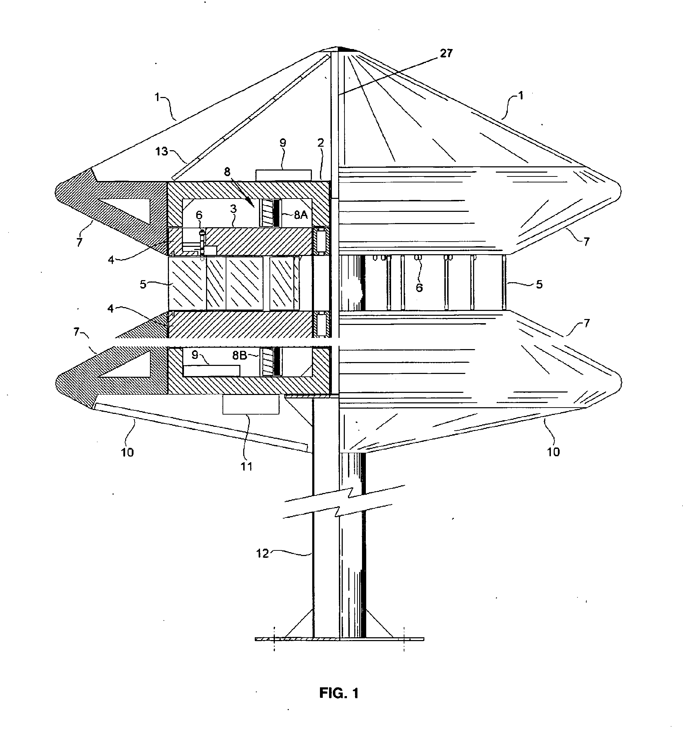

Figure 1 is an elevation view of the hybrid eolic-solar generator sectioned on its left half.
Figure 2 is a plan view of an embodiment of the eolic module.
Figure 3 is a section according to cutting plane AA of Figure 2.
Figure 4 is a plan view of the upper inertia flywheel with the stops housed in its holes.
Figure 5 is a lower view of the upper inertia flywheel without stops in the holes.
Figure 6 is a plan view of the lower inertia flywheel by cutting plane BB of Figure 3, in which V is the wind direction, and G is the rotation direction of the rotor.
Figure 7 is an elevation view of a particular embodiment of a stop with an articulated and foldable end and with a folding axis near that end, arranged on the upper inertia flywheel and in an idle position, which corresponds to the cutting plane DD of Figure 8.
Figure 8 is a right lateral view of the stop of Figure 7, by the cutting plane CC.
Figure 9 is a detailed view of a hole of the inertia flywheel of Figure 4 with one stop housed in said hole.
Figure 10 is a detailed view of a hole of the inertia flywheel of Figure 5, but with one stop housed in said hole.
Figure 11 is a right lateral view of the stop of Figure 7 with the articulated end retracted by the pressure of the vane in its rotation.
Figure 12 is an elevation view of the stop of Figure 7 with a 45° inclination produced by the centrifugal force.
Figure 13 is an elevation view of the embodiment of a stop with retractile end and with a folding axis near that retractile end.
Figure 14 is a left lateral view of the stop of Figure 13.
Figure 15 is a view of the stop of Figure 14 with half the stem uncovered to show the spring of the retractile end.
Figure 16 is a view of the stop of Figure 15 with the end retracted and the spring compressed.
Figure 17 is a rear view of the stop of Figure 13.
Figure 18 is an elevated view of a particular embodiment of a stop with an articulated and foldable end, and with a folding axis at the opposite end of the stem.
Figure 19 is a right lateral view of the stop of Figure 18.
Figure 20 is a rear view of the stop of Figure 18.
Figure 21 is an elevated view of a particular embodiment of a stop with a retractile end, and with a folding axis at the opposite end of the stem.
Figure 22 is a left lateral view of the stop of Figure 21.
Figure 23 is a view of the stop of Figure 22 with half the stem uncovered to show the spring of the retractile end.
Figure 24 is an elevated view of a particular embodiment of a stop with an electromagnet sectioned by its half and an articulated and foldable end.
Figure 25 is an elevated view of the stop of Figure 23 with the stem retracted.
Figure 26 is an elevated view of a particular embodiment of a stop with an electromagnet and a retractile end, with half of the stem uncovered for showing the spring of the retractile end.
Figure 27 is a plan view of a stop with an electromagnet.

The following is set of elements to which reference is made in these figures:
- 1.: photovoltaic solar module
- 2.: supporting structure for the eolic module
- 3.: eolic module rotor
- 4.: rotor inertia flywheels
- 5.: rotor mobile vanes
- 6.: stops for the rotor vanes
- 7.: aerodynamic edges of the eolic module
- 8.: permanent magnet electric generator
- 8A.: permanent magnet electric generator rotor
- 8B.: stator or coil of the permanent magnet electric generator
- 9.: electric and electronic control system
- 10.: light module
- 11.: rechargeable battery
- 12.: anchorage system
- 13.: solar cells of the photovoltaic solar module
- 14.: openings of the internal face of the inertia flywheels
- 15.: rotation axis of the rotor vanes
- 16.: holes for the stops for the rotor vanes
- 17.: articulated and foldable end of the stops
- 18.: retractile end of the stops
- 19.: first folding axis of the stops
- 20.: weight of the stops
- 21.: electromagnet of the stops
- 22.: stem of the stops
- 23.: first spring of the stem of the stops
- 24.: second spring of the articulated and foldable end of the stops
- 25.: third spring of the retractile end of the stops
- 26.: second folding axis of the end of the stops
- 27.: central rotation axis of the flywheels

### DESCRIPTION OF PREFERRED EMBODIMENTS OF THE INVENTION

The object of the present invention is a hybrid eolic-solar generator that comprises a photovoltaic solar module 1 formed by a set of solar cells 13, which may be directed to the sun.

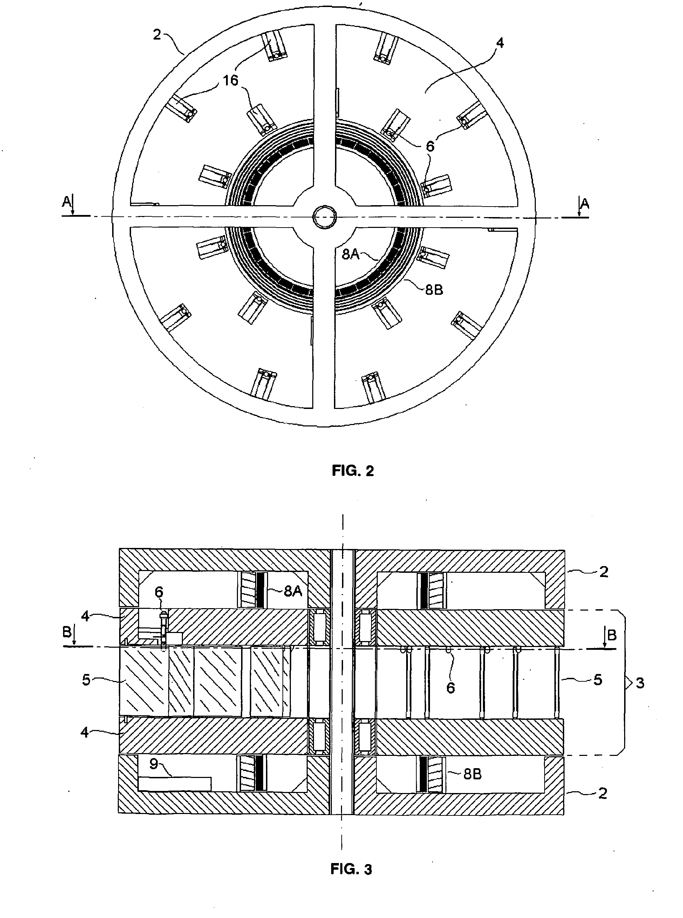

It also comprises an eolic module, as it is shown in Figures 2 and 3, formed by a rigid supporting structure 2, that holds the rest of the generator parts, and by an eolic rotor 3 that consists of two horizontally arranged inertia flywheels 4, joined by a vertical rotation axis and mobile vanes 5 placed between the inertia flywheels 4, with two or more stops 6 for each vane 5.

According to a particular embodiment of the invention, the generator has aerodynamic wind leading edges 7 fixed to the structure 2.

Particularly, the eolic module has one or two permanent magnet generators 8 coupled to it, with the permanent magnet rotor 8A fixed to the inertia flywheel 4 and the stator or coil 8B fixed to the rigid structure 2 of the eolic module.

Preferably, the generator may also present an electric and electronic control system 9.

A light module 10 and rechargeable batteries 11 may be coupled to the hybrid eolic-solar generator.

It may also include an anchorage system 12 for fixing the generator to another structure or surface.

An essential feature of the present hybrid eolic-solar generator is the presence of an eolic rotor 3 that comprises two inertia flywheels 4 for supporting the vanes 5 and housing the stops 6 and their control mechanisms.

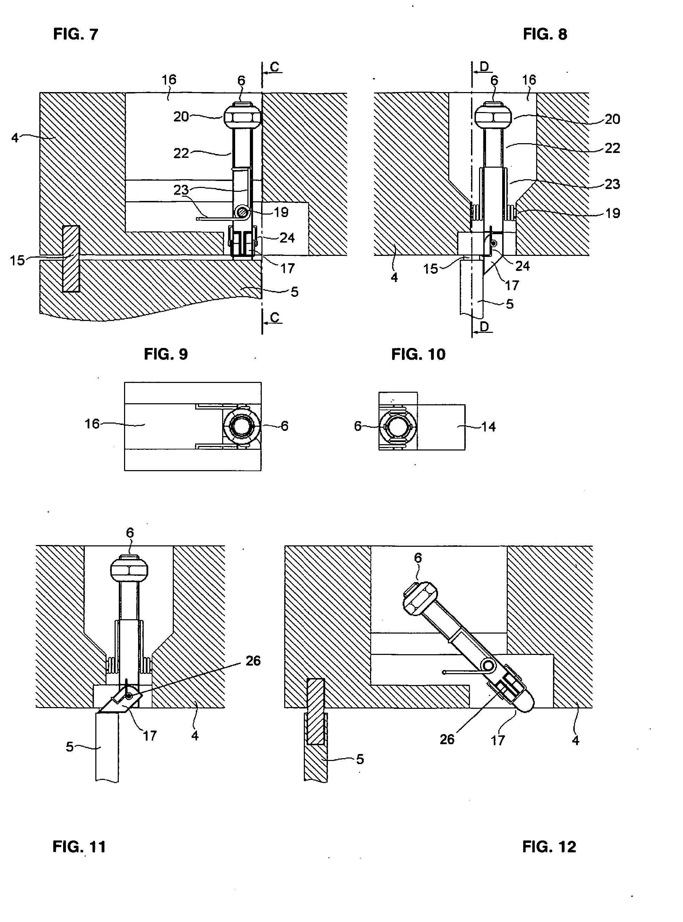

The dimensions of the inertia flywheels 4 are such that they allow practically all the structure of the stops 6 and their regulation and control mechanisms to be integrated in its interior, as it is shown in Figures 7 to 12.

The inertia flywheels 4 are horizontally arranged, integrally join together for rotating in unison, leave a space between them for the wind that propels them to flow and it is here where the vanes 5 are placed, as it is shown in Figure 3. The eolic rotor 3 is fixed to the central part of the structure 2, in order to make its rotation movement.

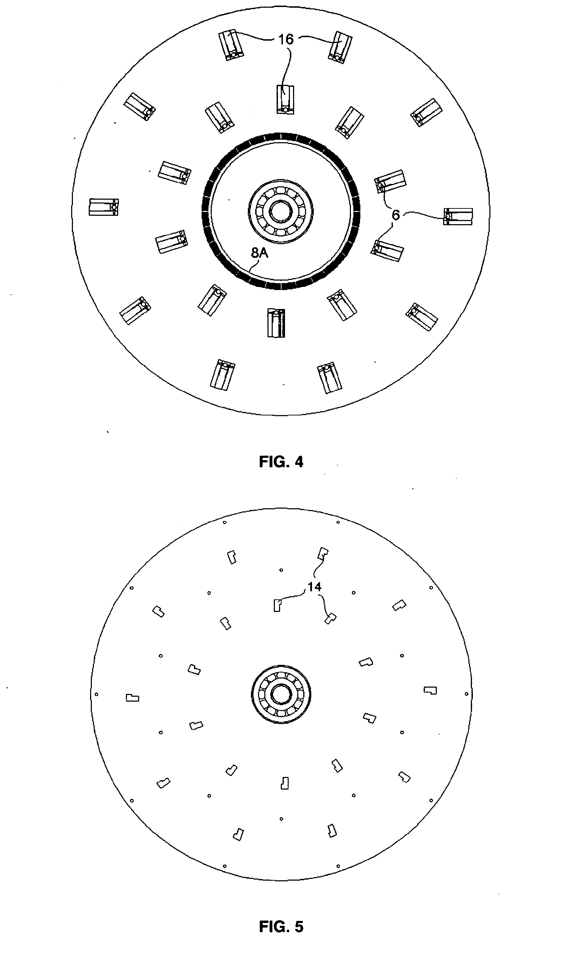

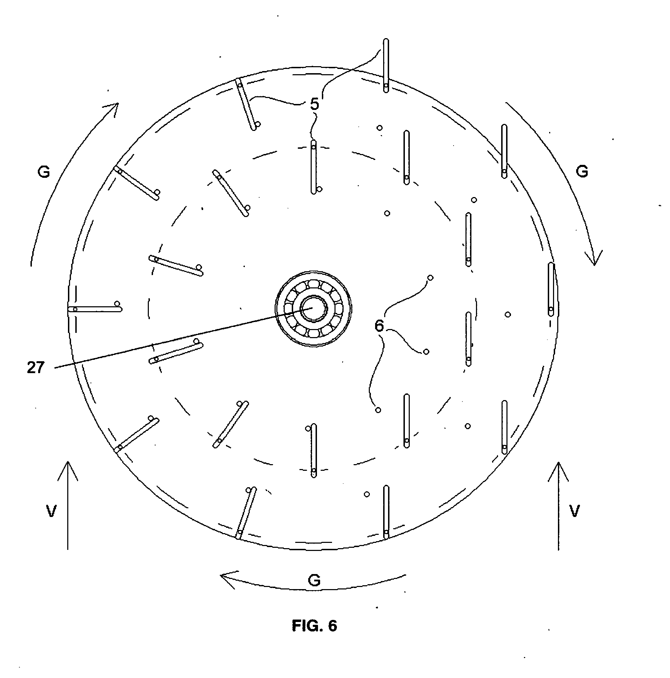

In Figures 5 and 6 it may be seen that the internal face of the inertia flywheels 4 present a compact surface where, through some openings 14, only the ends 17, 18 of the stops 6 of the vanes 5 project, which facilitates the wind flow, preventing unwanted turbulence.

Another relevant feature of the hybrid eolic-solar generator is that the vanes 5 present a rotation axis 15 near one of their ends that allows their 360° free rotation in both directions, with no obstacles, when the stops are deactivated.

And the fundamental technical feature is that the generator presents one or two stops 6 for each vane, housed in holes 16 of the inertia flywheels 4 so that the vanes 5 make contact with an end 17,18 of the stop 6 when, along their rotation, they are directed towards the central axis of the flywheels 27, as it is observed in Figure 6.

According to a preferred embodiment of the invention, the stop 6 comprises a stem 22 with a folding axis 19 in a position displaced from its center, by which it is supported on the inertia flywheel 4, in a plane that is horizontal and basically perpendicular to the radius of the flywheel 4.

According to a particular embodiment, the stem has an articulated and foldable end 17 towards the folding end 19, but only in one direction.

If there exist two stops 6 for each vane 5, one will be placed on the upper inertia flywheel 4 and the other on the lower one, facing each other by their articulated and foldable ends 17. But if there is only one stop 6 for each vane 5, it will be placed on the upper inertia flywheel 4, with its articulated and foldable end 17 downwards.

According to a particular embodiment, the stem 22 also comprises a weight 20 adjustable by distance to the folding axis 19, placed at the opposite area of the articulated and foldable end 17.

Besides, the stop presents a first spring 23 for maintaining the stem 22 in vertical position when the rotor 3 is idle, but it may be surpassed by the centrifugal force generated during the rotation of the rotor 3. This first spring 23 may be absent in the stops 6 placed on the lower inertia flywheel 4, being its effect substituted by the force of gravity. It also presents a second spring 24 for maintaining the articulated end 17 aligned with the stem 22, but it may be surpassed when the vane 5 presses on the end 17 on the side from which it may be folded. This second spring 24 may be absent in the stops 6 placed on the upper inertia flywheel 4, being its effect substituted by the force of gravity.

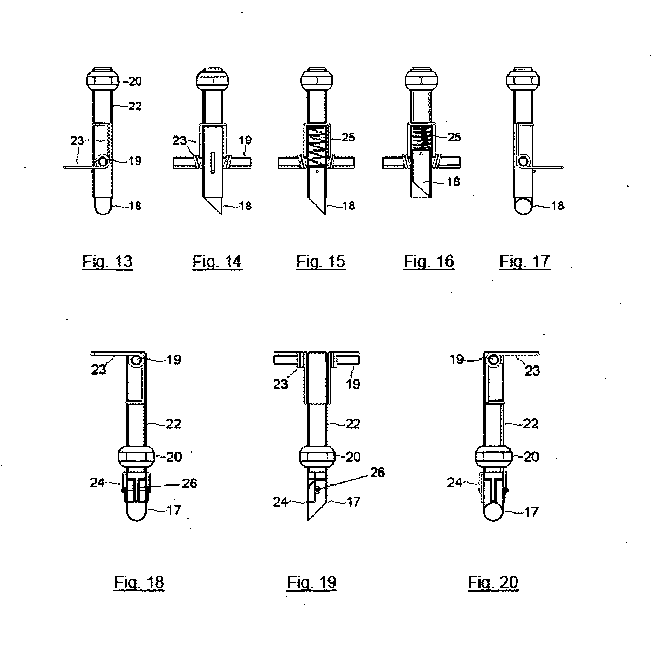

According to another particular embodiment of the invention, the end 18 of the stem 22 on which the vane 5 makes contact in its rotation is retractile towards the longitudinal direction of the stem 22, with a third spring 25 that maintains it extended, but it may be compressed when the vane 5 presses on the end 18 on the side from which it may be retracted. This embodiment is observed in Figures 13 to 17.

According to this embodiment, the stop 6 presents a first spring 23 for maintaining the stem 22 in vertical position when the rotor 3 is idle, but it may be surpassed by the centrifugal force generated during the rotation of the rotor 3. This first spring 23 may be absent in the stops 6 placed on the lower inertia flywheel 4, being its effect substituted by the force of gravity.

Figures 18 to 20 show another embodiment of the invention in which the folding axis 19 of the stem 22 is placed at the opposite end of the articulated and foldable end 17.

In this case, the weight 20 adjustable by distance to the folding axis 19 is placed basically at the farthest half of the end with folding axis 19, near the articulated and foldable end 17.

Here the stop 6 presents a first spring 23 for maintaining the stem 22 in vertical position when the rotor 3 is idle, but it may be surpassed by the centrifugal force generated during the rotation of the rotor 3. This first spring 23 may be absent in the stops 6 placed on the upper inertia flywheel 4, being its effect substituted by the force of gravity.

Likewise, in this embodiment the stop presents a second spring 24 for maintaining the articulated end 17 aligned with the stem 22, but it may be surpassed when the vane 5 presses on the end 17 on the side from which it may be folded. This second spring 24 may be absent in the stops 6 placed on the upper inertia flywheel 4, being its effect substituted by the force of gravity.

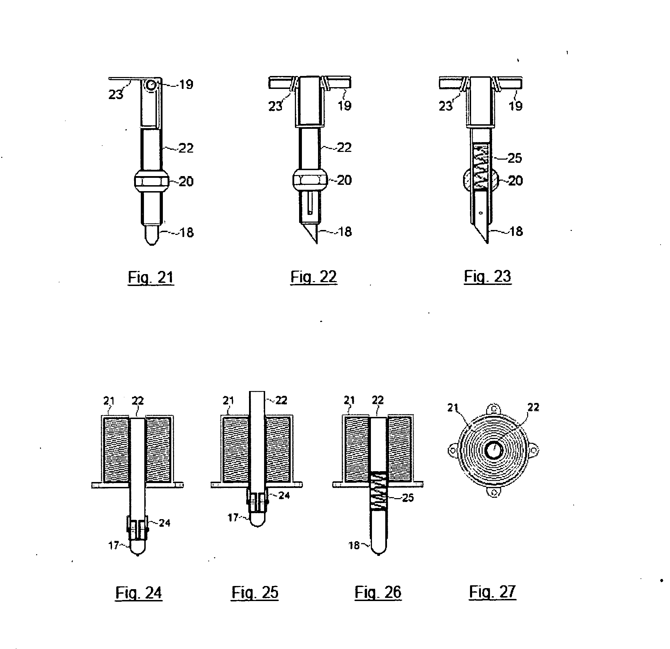

Figures 21 to 23 show another particular embodiment of the invention in which the end of the stem 22 on which the vane 5 makes contact in its rotation is retractile 18 towards the longitudinal direction of the stem 22, with a third spring 25 that maintains it extended, but it may be compressed when the vane 5 presses on the end 18 on the side from which it may be retracted.

In this case the folding axis 19 of the stem 22 is placed at the opposite end of the retractile end 18 and the weight 20 adjustable by distance is placed basically at the farthest half of the end with folding axis 19.

The stop 6 presents a first spring 23 for maintaining the stem 22 in vertical position when the rotor 3 is idle, but it may be surpassed by the centrifugal force generated during the rotation of the rotor 3. This first spring 23 may be absent in the stops 6 placed on the upper inertia flywheel 4, being its effect substituted by the force of gravity.

According to another particular embodiment, shown in Figures 24 and 25, the stop 6 comprises an electromagnet 21 whose nucleus is the stem 22, with an end 17 on which the vane 5 is supported in its rotation, being this end 17 articulated and foldable towards the direction that is perpendicular to the plane of vane 5 when it makes contact with the latter, but, as in previous cases, in only one direction.

In this case the stop presents a second spring 24 to maintain the articulated end 17 aligned with the stem 22, but it may be surpassed when the vane 5 presses on the end 17 on the side from which it can be folded. This second spring 24 may be absent in the stops 6 placed on the upper inertia flywheel 4, its effect being substituted by the force of gravity.

According to an alternative embodiment, similar to the previous one, shown in Figure 26, the stop comprises an electromagnet 21 whose nucleus is the stem 22 with an end 18 on which the vane 5 is supported in its rotation which is retractile in the longitudinal direction of the stem 22, with a third spring 25 which keeps it extended, but it may be compressed when the vane 5 presses on the end 18 on the side from which it may be retracted.

Examples of other embodiments have been anticipated, where the inertia flywheels 4 may vary their moment of inertia by means of the radial displacement of their mass towards the exterior as the rotation speed increases, which would improve their operation condition at different wind speed.

The invention having been clearly described, it is hereby stated that the particular embodiments hereinabove described can have small modifications providing that the main principle and essence of the invention are not altered.

## Claims

1. Hybrid eolic-solar generator comprising
- a photovoltaic solar module (1) arranged on
- an eolic module comprising
- a rigid supporting structure (2) and
- a vertical rotation axis rotor (3), in turn comprising,
- two inertia flywheels horizontally arranged, one on the upper part of the rotor (3) and the other on the lower part of said rotor (3), which rotate integrally around a central axis (27)
- a plurality of mobile vanes (5) between the inertia flywheels (4) with their rotation axis perpendicular to said inertia flywheels (4),
- and at least one stop (6) for each vane (5),
said hybrid eolic-solar generator is **characterized in that**
- the stops (6) for the vanes (5) comprise a stem (22) and are housed in the interior of the inertia flywheel (4) arranged on the upper part of the rotor (3) so that the end (17,18) of each stop (6) projects from it, making contact with the vanes (5) with said end (17,18) of the stops (6) when throughout their rotation propelled by the wind they are directed towards the central axis of the flywheels (4), thus originating the rotation of the rotor (3),
- and **in that** the stops (6) comprise means for withdrawing their ends (17,18) which withdraw said ends (17,18) and allow the free rotation of said vanes (5) in a particular direction.

2. Hybrid eolic-solar generator, according to claim 1, **characterized in that** it comprises an additional stop (6) for each vane (5) of the rotor (3) housed in the interior of the inertia flywheel (4) arranged in the lower part of the rotor (3), that is equal to the stop (6) housed in the interior of the inertia flywheel (4) arranged on the upper part of the rotor (3), and is housed in the same position as it is with respect to the vane (5), being both stops (6) faced by their ends (17,18).

3. Hybrid eolic-solar generator, according to any of the previous claims, **characterized in that** the withdrawal means of the ends (17) of the stops (6) comprise, arranged in said ends (17),
- a second folding axis (26) that allows the articulation and folding of the end (17) when its corresponding vane (5) makes contact with it throughout its rotation in a particular direction allowing the free rotation of the vane in said direction, preventing the rotation of the vane (5) in the opposite direction,
- and a second spring (24) that maintains the articulated end (17) aligned with the stem (22) when the vane (5) does not make contact with the stop (6) and that is surpassed when the vane presses on said articulated end (17) in the direction to which said articulated end (17) is foldable, thus allowing the free rotation of the vane (5).

4. Hybrid eolic-solar generator, according to any of the claims 1 to 2, **characterized in that** the withdrawal means of the ends (18) of the stops (6) comprise, arranged in said ends (18), a third spring (25) which keeps the extended end (18) aligned with the stem (22) when the vane (5) does not make contact with the stop (6) and which is compressed when the vane presses on said end (18) in the direction to which said end is retractile (18), thus allowing the free rotation of the vane (5) in said direction, preventing the rotation of the vane (5) in the opposite direction.

5. Hybrid eolic-solar generator, according to any of the preceding claims, **characterized in that** the stops (6) additionally comprise
- a folding axis (19) perpendicular to the longitudinal direction of the stem (22), and also perpendicular to the radius of the inertia flywheel (4),
- a weight (20) arranged in the stem (22) adjustable by distance to said folding axis (19),
- and a first spring (23) which keeps the stem (22) in vertical position when the rotor (3) is idle and which is surpassed by a particular centrifugal force generated during the rotation of the rotor (3) allowing the folding of the stop (6) around de folding axis (19), and the free rotation of the corresponding vane (5).

6. Hybrid eolic-solar generator, according to any of the preceding claims, **characterized in that** each stop (6) comprises an electromagnet (21) whose nucleus is the stem (22) of the stops (6), which withdraws said stop (6) through its corresponding electronic regulation allowing the free rotation of the vanes (5) in both directions.

7. Hybrid eolic-solar generator, according to any of the preceding claims, **characterized in that** it comprises fixed to each inertia flywheel (4), by its external face, a permanent magnet generator (8), being its rotor (8A) arranged on the inertia flywheel (4) and its stator (8B) on the supporting structure (2) of the eolic module.

8. Hybrid eolic-solar generator, according to any of the preceding claims, **characterized in that** it comprises a light module (10) which provides lighting, fixed on the lower part of the supporting structure (2).

9. Hybrid eolic-solar generator, according to any of the preceding claims, **characterized in that** it comprises an electric and electronic control system (9) arranged on the supporting structure (2) of the eolic module which regulates the operation of the solar and eolic modules (1) and their production of electricity, as well as the output of electricity to the supply network and the energy supply to the light module (10).

10. Hybrid eolic-solar generator, according to any of the preceding claims, **characterized in that** it comprises fixed to the supporting structure (2) of the eolic module some aerodynamic edges (7) that direct the wind, increasing the flow that goes through the rotor (3) and minimizing the whole generator resistance to the wind.

11. Hybrid eolic-solar generator, according to any of the preceding claims, **characterized in that** the inertia flywheels (4) comprise means for the displacement of their mass towards their external edges (4) for varying their moment of inertia.
